# EUROPEAN PATENT APPLICATION

(11) **EP 4 475 576 A1**
(43) Date of publication of application: **11.12.2024**
(21) Application number: 24180888.0
(22) Date of filing: 07.06.2024
(51) Int. Cl.: H04W 8/18, H04W 36/00, H04W 72/00

(54) **DEDICATED DEVICE TRIGGERS FOR IOT**

(30) Priority: 09.06.2023 US 202318207973
(71) Applicant: Giesecke+Devrient Mobile Security America, Inc., Dulles, VA 20166 (US)
(72) Inventor: WIMBOECK, Ulrich, Dulles, 20166 (US); MARDOMINGO, Alba Royuela, Dulles, 20166 (US); BALAN, Roopesh, Dulles, 20166 (US)
(74) Representative: LKGLOBAL Lorenz & Kopf Patentanwalt Attorney at Law PartG mbB

(57) **Abstract**

A universal integrated circuit card (UICC) is configured to provide to a communication device a list indicating i) available profiles of a plurality of profiles that allow access by the communication device to respective wireless networks, and ii) a public network profile of the plurality of profiles that is currently enabled, where the available profiles include at least a private network profile designated with a fallback attribute. The UICC receives, from the communication device, a trigger indicating a network event, such as loss of connectivity. In response to the trigger, the UICC identifies the appropriate profile as the fallback/anchor profile; disables the currently enabled network profile; enables the newly identified network profile; and sends a refresh command to the communication device.

## Description

### FIELD OF TECHNOLOGY

The present disclosure relates generally to wireless communications and, more particularly, to methods and devices for prioritizing and selecting between wireless network profiles.

### BACKGROUND

GSMA has defined the specifications SGP.01 and SGP.02, which provide embedded-SIM (eSIM) management functionality for the Machine to Machine (M2M) / Internet of Things (IoT) segment. In this approach, all eSIM management functions are triggered remotely via the Subscription Manager for Data Preparation (SM-DP) and the Subscription Manager for Secure Routing (SM-SR) functions. Local switching of profiles is explicitly not allowed within the specifications, except for emergency and test profiles. Besides that, the standards define two events that can transition eSIMs locally within an embedded universal integrated circuit card (eUICC): (i) "Fallback," which transitions from the currently enabled profile to a so-called "Fallback" profile, and (ii) "Switchback," which transitions from the Fallback profile to the previously-enabled profile. The GSMA standards do not define how the Fallback and Switchback functions are triggered. Accordingly, it is common practice within the industry to have an application within the eUICC that triggers these functions. Implementations vary, but normally these events are internal to the eUICC.

When these GSMA standards were first defined, few eSIM operations were anticipated other than, for example, during initial activation of a connected device, or at the occurrence of certain events (e.g., relocation, change of service provider, etc.). Recently, private mobile networks have been made available to the industry, which is changing the landscape of mobile networks. Typically, private networks are only available in specific locations (e.g., warehouse, production site, campus, store, EV charging stations, and so on) and usually have a limited range. Many device makers would like to benefit from offloading traffic from public mobile networks to private mobile networks (and vice-versa) as such networks are available. However, these device makers want to ensure that the devices are continually connected by using public mobile networks in all locations with no private network available. Both private and public networks require a SIM profile for network identification and authentication. This means that using SGP.01/02 requires more frequent eSIM operations, to toggle between private and public networks. The transition from one network to another should be as fast as possible to have continuous connectivity for the device. Since private networks have a limited range or may be available in locations where no public networks are available, remote operations as per SGP.01/02 can often not be performed since they require an active network connection. Unfortunately, the eUICC itself has no visibility on networks available within the device's reach, it can only detect lost connectivity. Therefore, an eUICC-based mechanism would be too slow to achieve continuous connectivity.

### SUMMARY

The following introduces a selection of concepts in a simplified form in order to provide a foundational understanding of some aspects of the present disclosure. The following is not an extensive overview of the disclosure, and is not intended to identify key or critical elements of the disclosure or to delineate the scope of the disclosure. The following merely presents some of the concepts of the disclosure as a prelude to the more detailed description provided thereafter.

In one aspect, the present disclosure relates to a non-transient computer-readable storage medium configured to be affixed to a communication device for wireless communication, the storage medium comprising: a memory storing a plurality of profiles, each of the plurality of profiles comprising data that allows access by the communication device to a respective wireless network; and instructions that implement a universal integrated circuit card (UICC), the instructions being executable by one or more processors to cause the one or more processors to: provide to the communication device a list indicating i) available profiles of the plurality of profiles, and ii) a public network profile of the plurality of profiles that is currently enabled, wherein the available profiles include at least a private network profile designated with a fallback attribute; receive, from the communication device, a fallback trigger to enable a fallback profile corresponding to the fallback attribute; and in response to the fallback trigger: identify the private network profile as the fallback profile corresponding to the fallback attribute; disable the public network profile; enable the private network profile; and send a refresh command to the communication device, wherein the refresh command is for causing the communication device to authenticate with a private wireless network corresponding to the private network profile.

In another aspect, the present disclosure relates to a non-transient computer-readable storage medium configured to be affixed to a communication device for wireless communication, the storage medium comprising: a memory storing a plurality of profiles, each of the plurality of profiles comprising data that allows access by the communication device to a respective wireless network; and instructions that implement a universal integrated circuit card (UICC), the instructions being executable by one or more processors to cause the one or more processors to: provide to the communication device a list indicating i) available profiles of the plurality of profiles, and ii) a private network profile of the plurality of profiles that is currently enabled, wherein the available profiles include at least a public network profile designated with a fallback attribute; receive, from the communication device, a fallback trigger to enable a fallback profile corresponding to the fallback attribute; and in response to the fallback trigger: identify the public network profile as the fallback profile corresponding to the fallback attribute; disable the private network profile; enable the public network profile; and send a refresh command to the communication device, wherein the refresh command is for causing the communication device to authenticate with a public wireless network corresponding to the public network profile.

In yet another aspect, the present disclosure relates to a method implemented by a universal integrated circuit card (UICC) installed in a communication device, the method comprising: providing, to the communication device, a list indicating i) available profiles of a plurality of profiles that allow access by the communication device to respective wireless networks, and ii) a public network profile of the plurality of profiles that is currently enabled, wherein the available profiles include at least a private network profile designated with a fallback attribute; receiving, from the communication device, a fallback trigger to enable a fallback profile corresponding to the fallback attribute; and in response to receiving the fallback trigger: identifying the private network profile as the fallback profile corresponding to the fallback attribute; disabling the public network profile; enabling the private network profile; and sending a refresh command to the communication device, wherein the refresh command is for causing the communication device to authenticate with a private wireless network corresponding to the private network profile.

Further scope of applicability of the apparatuses and methods of the present disclosure will become apparent from the more detailed description given below. However, it should be understood that the following detailed description and specific examples, while indicating embodiments of the apparatus and methods, are given by way of illustration only, since various changes and modifications within the spirit and scope of the concepts disclosed herein will become apparent to those skilled in the art from the following detailed description.

### BRIEF DESCRIPTION OF THE DRAWINGS

These and/or other aspects will become apparent and more readily appreciated from the following description of the embodiments, taken in conjunction with the accompanying drawings of which:
Fig. 1 is a block diagram illustrating an example operating environment for one or more embodiments described herein.
Fig. 2 is a block diagram illustrating an example universal integrated circuit card, according to one or more embodiments described herein.
Fig. 3 is a schematic diagram illustrating example data flows, states, and operations for toggling a fallback network profile, according to one or more embodiments described herein.
Fig. 4 is a schematic diagram illustrating example data flows, states, and operations for toggling a switchback network profile, according to one or more embodiments described herein.
Fig. 5 is a flow diagram illustrating an example method for toggling a fallback private network profile, according to one or more embodiments described herein.
Fig. 6 is a flow diagram illustrating an example method for toggling a fallback public network profile, according to one or more embodiments described herein.

The headings provided herein are for convenience only and do not necessarily affect the scope or meaning of what is claimed in the present disclosure.

Embodiments of the present disclosure and their advantages are best understood by referring to the detailed description that follows. It should be appreciated that like reference numbers are used to identify like elements illustrated in one or more of the figures, wherein showings therein are for purposes of illustrating embodiments of the present disclosure and not for purposes of limiting the same.

### DETAILED DESCRIPTION

Various examples and embodiments of the present disclosure will now be described. The following description provides specific details for a thorough understanding and enabling description of these examples. One of ordinary skill in the relevant art will understand, however, that one or more embodiments described herein may be practiced without many of these details. Likewise, one skilled in the relevant art will also understand that one or more embodiments of the present disclosure can include other features and/or functions not described in detail herein. Additionally, some well-known structures or functions may not be shown or described in detail below, so as to avoid unnecessarily obscuring the relevant description.

Embodiments of the present disclosure relate to methods, systems, and devices for selecting or toggling between wireless network profiles. In an example, a communication device (e.g., IoT device) for wireless communication may be configured to trigger one or more functions that cause a UICC (e.g., an eUICC, an integrated UICC (iUICC), etc.) installed in the communication device to toggle or switch from a currently enabled network profile to another network profile corresponding to a different wireless network available to the device without the need for backend operations (e.g., without operations by a remote server).

It should be noted that while one or more embodiments described herein make reference to implementation in a eUICC, aspects of the present disclosure may alternatively be applied to a physical UICC chip and/or an iUICC. An iUICC is a tamper-resistant element within a system-on-a-chip (SoC). Also known as an Integrated SIM (iSIM), iUICC is an isolated hardware component combined with a baseband chipset to create a single connectivity module.

In an embodiment, a function may be provided that informs the communication device about the available networks that it can select from. Such a function allows for the instantaneous switching of network profiles without the need for backend operations. In an example, the communication device may be able to detect signal strength of available networks. With this capability, combined with the network information provided by the eUICC, the communication device will be able to determine which network to use in a manner that is significantly faster than the mechanism used by the eUICC. It should be understood that the communication device and the eUICC do not explicitly choose a network. Rather, the toggle function described herein may enable the communication device to trigger an event (sometimes referred to herein as a "fallback trigger") that would cause the eUICC to switch (or "fallback") from a currently-enabled public network profile to a private network profile, in an embodiment. Additionally, the toggle function described herein may enable the communication device to trigger an event (sometimes referred to herein as a "switchback trigger") that would cause the eUICC to switch (or "switchback") from the currently-enabled private network profile to the previously-enabled public network profile (sometimes referred to as the "anchor" profile).

As will be described in greater detail herein, in one or more embodiments, the eUICC is configured to provide a number of different functions, which may be called or triggered by the communication device. In one example, the communication device may trigger a fallback function within the eUICC. If the fallback function is triggered within the eUICC, the eUICC will switch from a currently-enabled network profile to a fallback network profile. For example, in an embodiment, if the fallback function is triggered within the eUICC, the eUICC will switch from a currently-enabled public network profile to a private network profile. The private network profile, which in this scenario may be considered the "fallback network profile," corresponds to a private network that is currently available to the communication device. In another embodiment, if the fallback function is triggered within the eUICC, the eUICC will switch from a currently-enabled private network profile to a public network profile. The public network profile, which in this example may be considered the "fallback network profile," corresponds to a public network that is currently available to the communication device.

It should be understood that, in accordance with at least one embodiment, the fallback trigger and switchback trigger may be the same instruction to the eUICC. For example, the eUICC may be configured to make a determination whether the instruction received is to trigger the fallback function or the switchback function, based off of the current configuration of the eUICC. In an example, if the fallback network profile is currently enabled, the eUICC would consider the received instruction as a switchback trigger. In another example, if a public network profile is currently enabled (which is not the fallback network profile), in this context the instruction received by the eUICC may be interpreted as a fallback trigger.

In an example, at some point in time after triggering the fallback function within the eUICC, the communication device may trigger a switchback function within the eUICC. If the switchback function is triggered within the eUICC, the eUICC will switch from the currently-enabled network profile back to the previously-enabled network profile. For example, in an embodiment, if the switchback function is triggered within the eUICC, the eUICC will switch from the currently-enabled private network profile back to the previously-enabled public network profile. The public network profile, which in this scenario may be considered the "switchback network profile" or the "anchor network profile," corresponds to the public network that may have been available to the communication device earlier and is now currently available to the communication device. In another embodiment, if the switchback function is triggered within the eUICC, the eUICC will switch from the currently-enabled public network profile to the previously-enabled private network profile. The private network profile, which in this example may be considered the "switchback network profile" or the "anchor network profile," corresponds to the private network that may have been available to the communication device earlier and is now currently available to the communication device. It should be noted that while either a private network or a public network may serve as a fallback network, in at least some embodiments having the private network as the fallback network is preferred since it allows for easier provisioning of new public networks.

In an embodiment, the eUICC is configured to provide a list of available profiles to the communication device. For example, the communication device may trigger a profile list function within the eUICC. If the communication device triggers the profile list function (e.g., by sending a "GetProfileList" request to the eUICC) in the eUICC, the eUICC will provide to the communication device a list of all network profiles available on the eUICC. In an example, the list of network profiles provided by the eUICC to the communication device includes at least the fallback network profile and the switchback network profile. Depending on the implementation, other network profiles available on the eUICC may or may not be masked. In an embodiment, in the list of profiles provided by the eUICC to the communication device, the fallback network profile and/or the switchback network profile may be marked or otherwise identified to inform the communication device as to which network profiles the communication device can toggle locally using the functions (e.g., fallback and switchback functions) described above. In an example, the list of profiles provided by the eUICC may include mobile country codes and/or mobile network codes of each network corresponding to the network profiles in the list. In one example, the list of profiles may also include extended information on one or more private network profiles in the list of available profiles.

In at least one embodiment, the list of profiles provided by the eUICC to the communication device may include information relevant to the last network profile switch that occurred. For example, the list of profiles may include information indicating whether the last network profile switch that occurred in the eUICC was triggered via a function of the communication device or was triggered via the backend (e.g., remote server). In an embodiment, the list of profiles maintained by the eUICC may be updated by the eUICC in response to operations performed by the network backend (e.g., remote server). As an example, the backend may cause the eUICC to download and enable a new network profile. Following such an operation, the eUICC may update the list of profiles to include the newly enabled network profile. In such an example, the newly enabled network profile may become the new anchor network profile.

In an embodiment, the eUICC may also provide one or more other functions in addition to or instead of the functions described above. For example, the eUICC may provide information about a preferred subscription list. A preferred subscription list may contain, for example, information such as a roaming list, which informs the communication device on which subscription to use in which network (region). Such a list may include a list of the subscriptions available and mapped to the Mobile Country Codes in which they should be used. For private networks, additional location information may be included in the list as well.

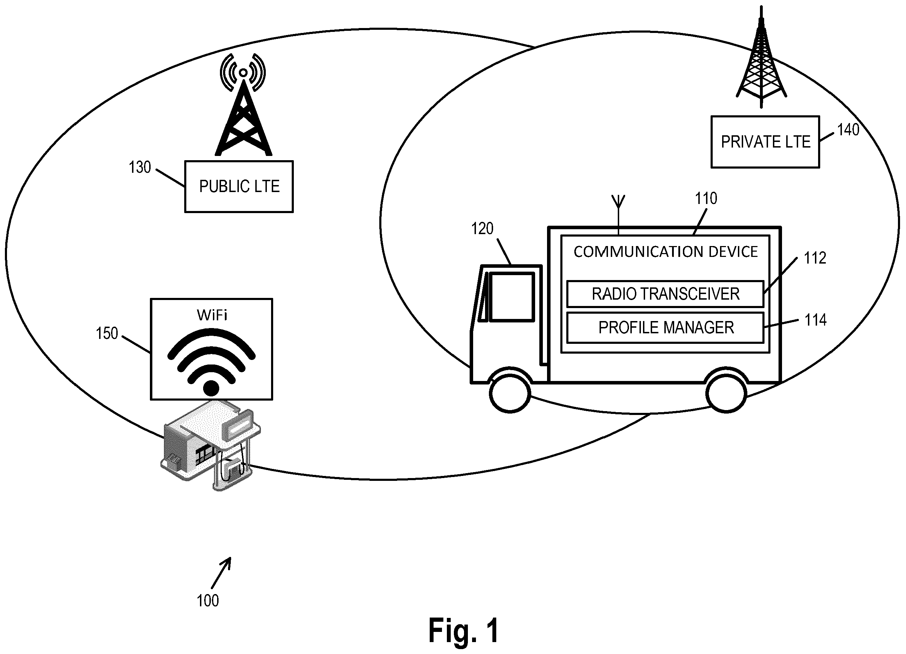

FIG. 1 illustrates an example operating environment 100 for one or more embodiments described herein. The example environment 100 includes multiple networks, including a public LTE network 130, a private LTE network 140, and a WiFi network 150. In an embodiment, a motor vehicle 120 (e.g., truck, car, etc.) may travel within and between the various wireless networks. The vehicle 120 may have installed therein a communication device 110 (e.g., IoT device) for wireless communication that includes a radio transceiver 112 and a profile manager 114. The profile manager 114 may be, for example, an eUICC.

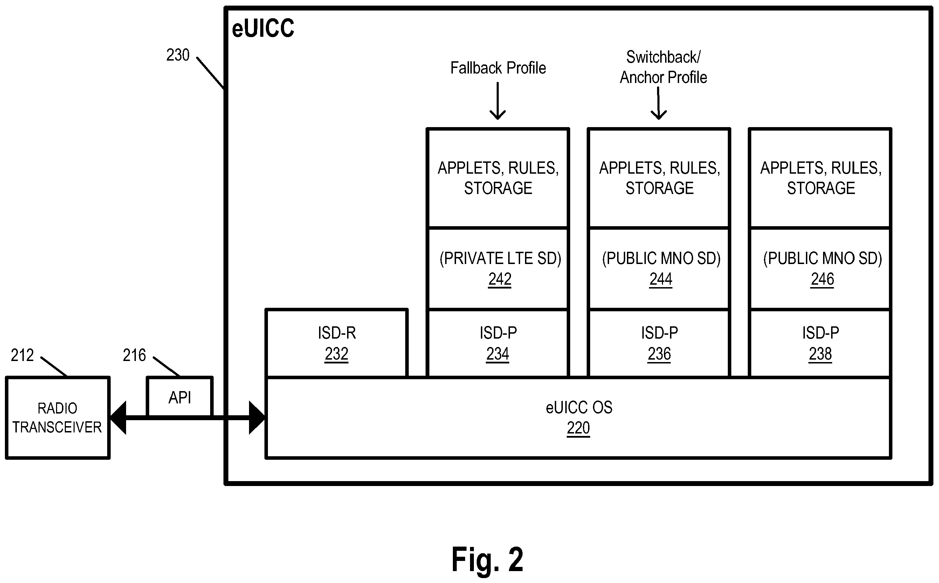

FIG. 2 illustrates an example eUICC in accordance with one or more embodiments described herein. In an embodiment, the eUICC 230 is configured for communication with a radio transceiver 212 via an application programming interface (API) 216. The eUICC 230 may include an eUICC operating system (OS) 220, an Issuer Security Domain Root (ISD-R) 232, and a plurality of network profiles (e.g., fallback profile and/or switchback/anchor profile). Each of the network profiles may include an Issuer Security Domain Profile (ISD-P) 234/236/238, a security domain, such as a Private LTE Security Domain or a Public Mobile Network Operator Security Domain (MNO SD) 242/244/246, and various applets, rules, and storage. In an example, a network profile is a combination of a file structure, data, and applications to be provisioned onto, or present on, the eUICC 230 and which allows, when enabled, access to a specific mobile network infrastructure.

The GSMA specification SGP.22 RSP Technical Specification Version 2.2.2 05 June 2020 (or briefly SGP.22) describes Remote SIM Provisioning by downloading of Profiles to an embedded Universal Integrated Circuit Card, eUICC, hosted in a device. The device is understood to be a mobile device or mobile terminal, such as, for example, a device or terminal having ability to communicate in a mobile network (e.g., a wireless network). Upon order by an End-User at a Mobile Network Operator (Operator or MNO, which is an entity providing access capability and communication services to its customers through a mobile network infrastructure), a ready-made profile already stored at the profile provisioning server (e.g., SM-DP+) is reserved. After that, a mutual authentication procedure between the profile provisioning server SM-DP+ and the eUICC is performed. After that, the reserved profile is downloaded to the eUICC, via the device, and installed in the eUICC.

Within the eUICC 230, each profile is contained in an individual Issuer Security Domain Profile (ISD-P) 234/236/238. Each ISD-P 234/236/238 contains one profile. The profile has the primary technological service task of authenticating the eUICC 230 and/or its device and/or its End-User to the mobile network to which the profile is associated. The ISD-P 234/236/238 or the profile can contain additional elements like applets and applications. The applets and applications can have service purposes going beyond authentication to the mobile network, for example payment services or ticketing services. Particularly, Near Field Communication, NFC, payment services can be implemented by an NFC payment applet or application in a profile or ISD-P. Currently, also the applets and applications offered for download to an ISD-P are static and ready-made. Profiles (or generally contents) to be downloaded to the eUICC 230 on the occasion of a Remote SIM Provisioning session are downloaded to the eUICC 230 in form of a Bound Profile Package BPP. The Bound Profile Package contains a sequence of Tag Length Value (TLV), commands for installation of, in this order (1) an ISD-P with Configuration of the ISD-P, (2) Meta Data, (3) Profile Protection Keys, (4) the payload of the actual profile in form of the Protected Profile Package, all in the eUICC.

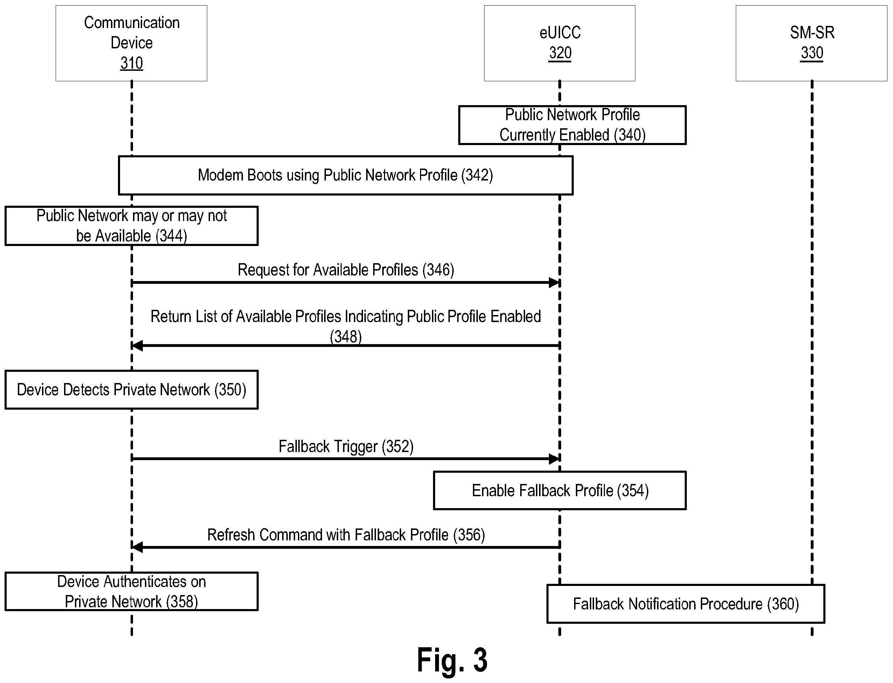

FIG. 3 illustrates example data flows, states, and operations for toggling a fallback network profile, according to an embodiment. In the example shown in FIG. 3, data flows occur between and operations are performed by a communication device 310, an eUICC 320, and a Subscription Manager Secure Routing (SM-SR) device 330. In an embodiment, communication device 310 may be similar to communication device 110 shown in FIG. 1 and described above, and eUICC 320 may be similar to eUICC 230 shown in FIG. 2 and described in detail above.

In an example, a public network profile may be currently enabled (340) in the eUICC 320. Because the public network profile is the currently enabled network profile, the communication device 310 (e.g., the modem in the communication device 310) may attempt to authenticate using the public network profile (342). The public network profile may correspond to a public wireless network that is available or is not available (344) to the communication device 310. The communication device 310 may send a request for available network profiles (346) to the eUICC 320. In an example, the communication device 310 may send a "GetProfileList" request to the eUICC 320. In response to receiving the request for available network profiles (346) from the communication device 310, the eUICC 320 may provide to the communication device 310 a list of all network profiles available on the eUICC (348). In one example, the list of available network profiles provided by the eUICC 320 may include an indication that the public network profile is the currently enabled network profile. In another example, the list of available network profiles provided by the eUICC 320 to the communication device 310 includes at least the currently enabled public network profile and at least a private network profile designated with a fallback attribute. In another example, the list of available network profiles provided by the eUICC 320 to the communication device 310 includes at least the fallback network profile and the currently enabled public network profile (which in the present example is the "switchback network profile"), and the fallback network profile and/or the switchback network profile may be marked or otherwise identified to inform the communication device 310 as to which network profiles the communication device 310 can toggle locally using the fallback and switchback functions, which are described in detail above.

The communication device 310 may be configured to scan for available wireless networks and may detect an available private wireless network (350). In one example, the communication device 310 may periodically check if a private wireless network is available, or if another wireless network that is preferred based on the location of the communication device 310 is available. In an example, private wireless networks may be prioritized over public wireless networks. In another example, public wireless networks may be prioritized over private wireless networks. If the communication device 310 determines that the detected private wireless network should be used, the communication device 310 may send a fallback trigger (352) to the eUICC 320 to trigger the fallback function and make the eUICC 320 switch to the private network profile. In one example, the communication device 310 may determine whether the detected private wireless network should be used based on information provided by the eUICC 320, such as, for example, a preferred network list and/or profile list. In an example, the fallback trigger (352) may be sent to the eUICC 320 to trigger the fallback function to enable the fallback network profile corresponding to the fallback attribute. In response to receiving the fallback trigger (352) from the communication device 310, the eUICC 320 may identify the private network profile (corresponding to the private wireless network detected by the communication device 310) as the fallback network profile corresponding to the fallback attribute, disable the currently enabled public network profile, and enable the private network profile (354). Once the eUICC 320 has enabled the fallback network profile (the private network profile), the eUICC 320 may send a refresh command (356) to the communication device 310. In an example, the refresh command (356) sent by the eUICC 320 to the communication device 310 is configured to cause the communication device 310 to authenticate (358) with the private wireless network corresponding to the fallback network profile (the private network profile).

In an embodiment, after the communication device 310 has authenticated with the private wireless network (358), the eUICC 320 may perform a fallback notification procedure (360) with the SM-SR device 330. In an example, the notification procedure may be performed in accordance with GSMA SGP.02.

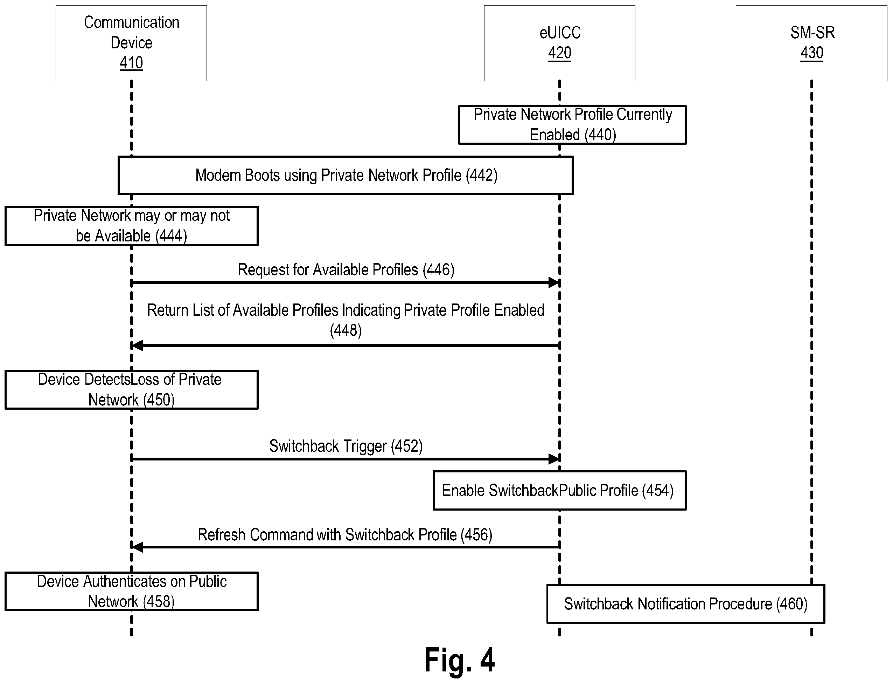

FIG. 4 illustrates example data flows, states, and operations for toggling a switchback network profile, according to an embodiment. In the example shown in FIG. 4, data flows occur between and operations are performed by a communication device 410, an eUICC 420, and a Subscription Manager Secure Routing (SM-SR) device 430. In an embodiment, communication device 410 may be similar to communication device 110 and/or 310 shown in FIGS. 1 and 3 and described in detail above. The eUICC 420 may be similar to eUICC 230 and/or 320 shown in FIGS. 2 and 3 and described in detail above.

As shown in FIG. 4, a private network profile may be currently enabled (440) in the eUICC 420. In one example, the private network profile may be the fallback network profile shown in FIG. 3 and described above. For example, the currently enabled private network profile may correspond to the private wireless network that was detected (350) by communication device 310 in FIG. 3. Because the private network profile is the currently enabled network profile, the communication device 410 (e.g., the modem in the communication device 410) may attempt to authenticate using the private network profile (442). The private network profile may correspond to a private wireless network that is or is not currently available to the communication device 410 (e.g., 444). The communication device 410 may send a request for available network profiles (446) to the eUICC 420. In an example, the communication device 410 may send a "GetProfileList" request to the eUICC 420. In another example, the "GetProfileList" may be cached within the communication device 410. In response to receiving the request for available network profiles (446) from the communication device 410, the eUICC 420 may provide to the communication device 410 a list of all network profiles available on the eUICC (448). In one example, the list of available network profiles provided by the eUICC 420 may include an indication that the private network profile is the currently enabled network profile. In another example, the list of available network profiles provided by the eUICC 420 to the communication device 410 includes at least the currently enabled private network profile and at least a previously enabled public network profile (which in the present example is the "switchback network profile").

The communication device 410 may detect a loss of connectivity with the private wireless network (450). In one example, the communication device 410 may scan for any other private wireless network that is available or check if a private wireless network that is preferred based on the location of the communication device 410 is available. If the communication device 410 is unable to detect another available private wireless network, the communication device 410 may send a switchback trigger (452) to the eUICC 420 to trigger the switchback function and make the eUICC 420 switch back to the previously enabled public network profile. It should be noted that while in one or more embodiments, the switchback function may be separate from the fallback function, in one or more other embodiments, the switchback and fallback functions may be combined. In such an instance, the communication device 410 would simply trigger a "lost network" function, which would then trigger either switchback or fallback depending on the current state in the eUICC 420.

In response to receiving the switchback trigger (452) from the communication device 410, the eUICC 420 may identify the previously enabled public network profile (e.g., the currently enabled public network profile (340) in FIG. 3) as the switchback network profile, disable the currently enabled private network profile, and enable the switchback public network profile (454). Once the eUICC 420 has enabled the switchback network profile (the public network profile), the eUICC 420 may send a refresh command (456) to the communication device 410. In an example, the refresh command (456) sent by the eUICC 420 to the communication device 410 is configured to cause the communication device 410 to authenticate (458) with the public wireless network corresponding to the switchback network profile (the public network profile).

In an embodiment, after the communication device 410 has authenticated with the public wireless network (458), the eUICC 420 may perform a switchback notification procedure (460) with the SM-SR device 430. In an example, the notification procedure may be performed in accordance with GSMA SGP.02.

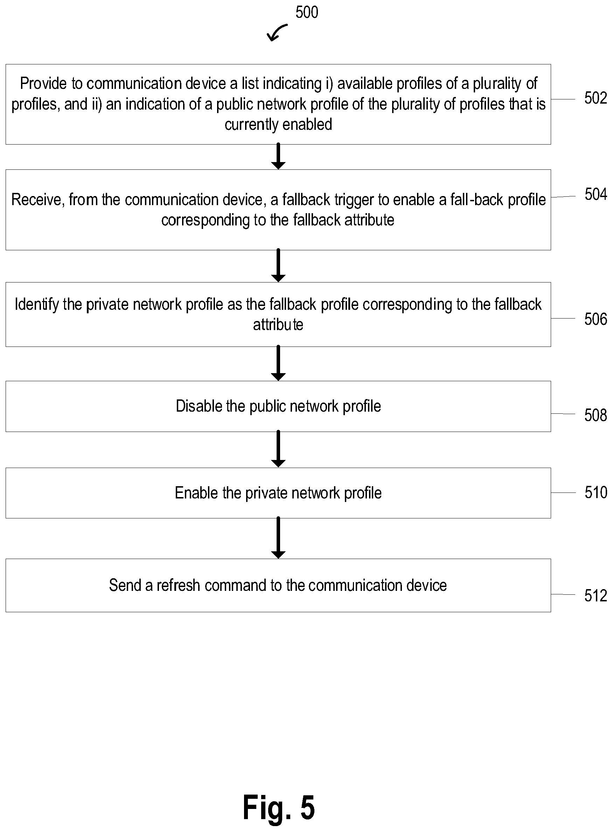

FIG. 5 illustrates an example process 500 for toggling a fallback private network profile, according to an embodiment. In one example, the process 500 may be performed by an eUICC installed within a communication device (e.g., IoT device). For example, the process 500 may be performed by eUICC 230, 320, or 420 shown in FIGS. 2-4, and the eUICC may be installed in or affixed to a communication device for wireless communication (e.g., any of communication devices 110, 310, 410 shown in FIGS. 1, 3, and 4), in an embodiment. In an example, the eUICC may store (e.g., in memory) one or more network profiles, each of which comprises data that allows the communication device access to a respective wireless network. In another embodiment, the example process 500 may be carried out by another component of a communication device for wireless communication.

At step 502, a list of available network profiles, of a plurality of network profiles that may be stored, is provided to the communication device. In an example, the list of available network profiles may include an indication of a public network profile of the plurality of profiles that is currently enabled. In one example, the list of available network profiles may include at least a private network profile designated with a fallback attribute and the currently enabled public network profile.

In an embodiment, the list of available network profiles may be provided at step 502 in response to receiving a request for the available profiles from the communication device. In an example, a request for available network profiles may be received from the communication device while the communication device is connected to a public wireless network corresponding to the public network profile.

At step 504, a fallback trigger (or loss of connectivity trigger) may be received from the communication device. In an example, the fallback trigger is to enable a fallback network profile corresponding to the fallback attribute. At step 506, in response to receiving the fallback trigger at step 504, the private network profile may be identified as the fallback profile corresponding to the fallback attribute. At step 508, the public network profile may be disabled, and at step 510, the private network profile may be enabled.

At step 512, a refresh command may be sent to the communication device. In one example, the refresh command is for causing the communication device to authenticate with a private wireless network corresponding to the private network profile.

In an embodiment, after the communication device authenticates with the private wireless network, a notification procedure may be performed with a subscription manager secure routing (SM-SR) device.

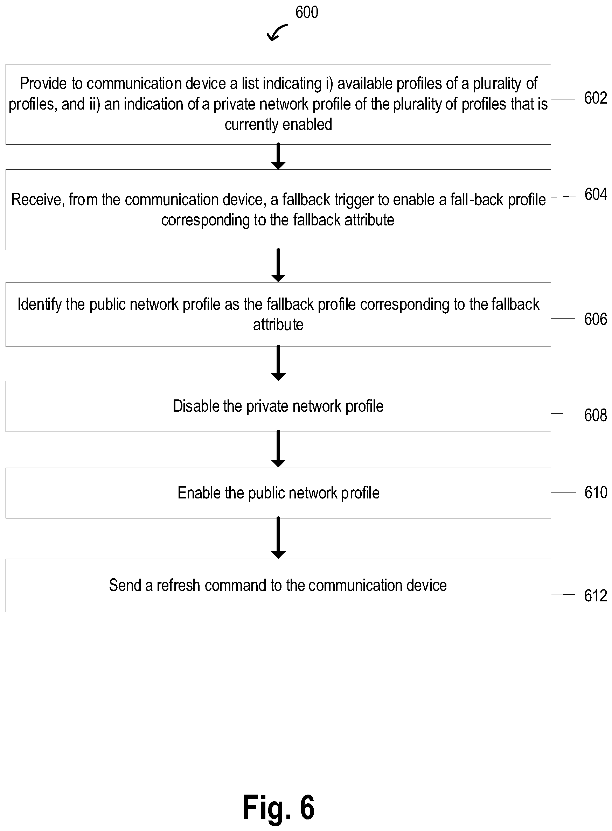

FIG. 6 illustrates an example process 600 for toggling a fallback public network profile, according to an embodiment. In an embodiment, the process 600 may be substantially similar to the process 500 for toggling a fallback private network profile, as described above and illustrated in FIG. 5. However, when the public network profile is the fallback profile, there is a difference in how new profiles are provisioned. For example, if a new public network profile is downloaded and enabled, it is also necessary to set the fallback attribute for this new profile to make it the fallback profile. This is an additional step that is not needed when the private network profile is the fallback profile.

In one example, the process 600 may be performed by an eUICC installed within a communication device (e.g., IoT device). For example, the process 600 may be performed by eUICC 230, 320, or 420 shown in FIGS. 2-4, and the eUICC may be installed in or affixed to a communication device for wireless communication (e.g., any of communication devices 110, 310, 410 shown in FIGS. 1, 3, and 4), in an embodiment. In an example, the eUICC may store (e.g., in memory) one or more network profiles, each of which comprises data that allows the communication device access to a respective wireless network. In another embodiment, the example process 600 may be carried out by another component of a communication device for wireless communication.

At step 602, a list of available network profiles, of a plurality of network profiles that may be stored, is provided to the communication device. In an example, the list of available network profiles may include an indication of a private network profile of the plurality of profiles that is currently enabled. In one example, the list of available network profiles may include at least a public network profile designated with a fallback attribute and the currently enabled private network profile.

In an embodiment, the list of available network profiles may be provided at step 602 in response to receiving a request for the available profiles from the communication device. In an example, a request for available network profiles may be received from the communication device while the communication device is connected to a private wireless network corresponding to the private network profile.

At step 604, a fallback trigger may be received from the communication device. In an example, the fallback trigger is to enable a fallback network profile corresponding to the fallback attribute. At step 606, in response to receiving the fallback trigger at step 604, the public network profile may be identified as the fallback profile corresponding to the fallback attribute. At step 608, the private network profile may be disabled, and at step 610, the public network profile may be enabled.

At step 612, a refresh command may be sent to the communication device. In one example, the refresh command is for causing the communication device to authenticate with a public wireless network corresponding to the public network profile.

In an embodiment, after the communication device authenticates with the private wireless network, a notification procedure may be performed with a subscription manager secure routing (SM-SR) device.

At least some of the various blocks, operations, and techniques described above may be implemented utilizing hardware, a processor executing firmware instructions, a processor executing software instructions, or any combination thereof. When implemented utilizing a processor executing software or firmware instructions, the software or firmware instructions may be stored in any non-transitory computer readable memory such as on a magnetic disk, an optical disk, or other storage medium, in a RAM or ROM or flash memory, processor, hard disk drive, optical disk drive, tape drive, etc. The software or firmware instructions may include machine readable instructions that, when executed by one or more processors, cause the one or more processors to perform various acts such as those described above.

When implemented in hardware, the hardware may comprise one or more of discrete components, an integrated circuit, an application-specific integrated circuit (ASIC), a programmable logic device (PLD), etc.

All references, including publications, patent applications, and patents, cited herein are hereby incorporated by reference to the same extent as if each reference were individually and specifically indicated to be incorporated by reference and were set forth in its entirety herein.

For the purposes of promoting an understanding of the principles of the invention, reference has been made to the embodiments illustrated in the drawings, and specific language has been used to describe these embodiments. However, no limitation of the scope of the invention is intended by this specific language, and the invention should be construed to encompass all embodiments that would normally occur to one of ordinary skill in the art. Descriptions of features or aspects within each embodiment should typically be considered as available for other similar features or aspects in other embodiments unless stated otherwise. The terminology used herein is for the purpose of describing the particular embodiments and is not intended to be limiting of exemplary embodiments of the invention. In the description of the embodiments, certain detailed explanations of related art are omitted when it is deemed that they may unnecessarily obscure the essence of the invention.

The use of any and all examples, or exemplary language (e.g., "such as") provided herein, is intended merely to better illuminate the invention and does not pose a limitation on the scope of the invention unless otherwise claimed. Numerous modifications and adaptations will be readily apparent to those of ordinary skill in this art without departing from the scope of the invention as defined by the following claims. Therefore, the scope of the invention is defined not by the detailed description of the invention but by the following claims, and all differences within the scope will be construed as being included in the invention.

No item or component is essential to the practice of the invention unless the element is specifically described as "essential" or "critical". It will also be recognized that the terms "comprises," "comprising," "includes," "including," "has," and "having," as used herein, are specifically intended to be read as open-ended terms of art. The use of the terms "a" and "an" and "the" and similar referents in the context of describing the invention (especially in the context of the following claims) are to be construed to cover both the singular and the plural, unless the context clearly indicates otherwise. In addition, it should be understood that although the terms "first," "second," etc. may be used herein to describe various elements, these elements should not be limited by these terms, which are only used to distinguish one element from another. Furthermore, recitation of ranges of values herein are merely intended to serve as a shorthand method of referring individually to each separate value falling within the range, unless otherwise indicated herein, and each separate value is incorporated into the specification as if it were individually recited herein.

## Claims

1. A non-transient computer-readable storage medium configured to be affixed to a communication device for wireless communication, the storage medium comprising:
a memory storing a plurality of profiles, each of the plurality of profiles comprising data that allows access by the communication device to a respective wireless network; and
instructions that implement a universal integrated circuit card (UICC), the instructions being executable by one or more processors to cause the one or more processors to:
provide to the communication device a list indicating i) available profiles of the plurality of profiles, and ii) a public network profile of the plurality of profiles that is currently enabled, wherein the available profiles include at least a private network profile designated with a fallback attribute;
receive, from the communication device, a fallback trigger to enable a fallback profile corresponding to the fallback attribute;
in response to the fallback trigger:
identify the private network profile as the fallback profile corresponding to the fallback attribute;
disable the public network profile;
enable the private network profile; and
send a refresh command to the communication device, wherein the refresh command is for causing the communication device to authenticate with a private wireless network corresponding to the private network profile.

2. The computer-readable storage medium of claim 1, wherein the instructions further cause the one or more processors to:
receive a request for the available profiles while the communication device is connected to a public wireless network corresponding to the public network profile.

3. The computer-readable storage medium of claim 2, wherein the instructions further cause the one or more processors to:
receive, from the communication device, a switchback trigger to re-enable the public network profile;
in response to the switchback trigger:
identify the public network profile as a switchback network profile;
disable the private network profile;
enable the public network profile; and
send another refresh command to the communication device, wherein the another refresh command is for causing the communication device to authenticate with the public wireless network corresponding to the public network profile.

4. The computer-readable storage medium of claim 3, wherein the switchback trigger corresponds to a connection loss with the private wireless network by the communication device.

5. The computer-readable storage medium of claim 1, wherein the UICC is one of (i) an embedded UICC (eUICC) and (ii) an integrated UICC (iUICC).

6. The computer-readable storage medium of claim 3, wherein the instructions further cause the one or more processors to:
perform a notification procedure with a subscription manager secure routing (SM-SR) device after authentication by the communication device with the public wireless network.

7. The computer-readable storage medium of claim 3, wherein:
the public network profile is a first public network profile; and
the instructions further cause the one or more processors to:
perform a download and enable procedure with a subscription manager secure routing (SM-SR) device, including:
receive a second public network profile from the SM-SR device;
store the second public network profile in the memory as one of the plurality of profiles;
disable the first public network profile;
enable the second public network profile; and
send the refresh command to the communication device, wherein the refresh command is for causing the communication device to authenticate with a second wireless network corresponding to the second public network profile.

8. The computer-readable storage medium of claim 1, wherein the instructions further cause the one or more processors to:
perform a notification procedure with a subscription manager secure routing (SM-SR) device after authentication by the communication device with the private wireless network.

9. A non-transient computer-readable storage medium configured to be affixed to a communication device for wireless communication, the storage medium comprising:
a memory storing a plurality of profiles, each of the plurality of profiles comprising data that allows access by the communication device to a respective wireless network; and
instructions that implement a universal integrated circuit card (UICC), the instructions being executable by one or more processors to cause the one or more processors to:
provide to the communication device a list indicating i) available profiles of the plurality of profiles, and ii) a private network profile of the plurality of profiles that is currently enabled, wherein the available profiles include at least a public network profile designated with a fallback attribute;
receive, from the communication device, a fallback trigger to enable a fallback profile corresponding to the fallback attribute;
in response to the fallback trigger:
identify the public network profile as the fallback profile corresponding to the fallback attribute;
disable the private network profile;
enable the public network profile; and
send a refresh command to the communication device, wherein the refresh command is for causing the communication device to authenticate with a public wireless network corresponding to the public network profile.

10. The computer-readable storage medium of claim 9, wherein the instructions further cause the one or more processors to:
receive a request for the available profiles while the communication device is connected to a private wireless network corresponding to the private network profile.

11. The computer-readable storage medium of claim 10, wherein the instructions further cause the one or more processors to:
receive, from the communication device, a switchback trigger to re-enable the private network profile;
in response to the switchback trigger:
identify the private network profile as a switchback network profile;
disable the public network profile;
enable the private network profile; and
send another refresh command to the communication device, wherein the another refresh command is for causing the communication device to authenticate with the private wireless network corresponding to the private network profile.

12. The computer-readable storage medium of claim 11, wherein the switchback trigger corresponds to a connection loss with the public wireless network by the communication device.

13. The computer-readable storage medium of claim 9, wherein the UICC is one of (i) an embedded UICC (eUICC) and (ii) an integrated UICC (iUICC).

14. The computer-readable storage medium of claim 11, wherein the instructions further cause the one or more processors to:
perform a notification procedure with a subscription manager secure routing (SM-SR) device after authentication by the communication device with the private wireless network.

15. The computer-readable storage medium of claim 11, wherein:
the private network profile is a first private network profile; and
the instructions further cause the one or more processors to:
perform a download and enable procedure with a subscription manager secure routing (SM-SR) device, including:
receive a second private network profile from the SM-SR device;
store the second private network profile in the memory as one of the plurality of profiles;
disable the first private network profile;
enable the second private network profile; and
send the refresh command to the communication device, wherein the refresh command is for causing the communication device to authenticate with a second wireless network corresponding to the second private network profile.

16. The computer-readable storage medium of claim 9, wherein the instructions further cause the one or more processors to:
perform a notification procedure with a subscription manager secure routing (SM-SR) device after authentication by the communication device with the public wireless network.

17. A method implemented by a universal integrated circuit card (UICC) installed in a communication device, the method comprising:
providing, to the communication device, a list indicating i) available profiles of a plurality of profiles that allow access by the communication device to respective wireless networks, and ii) a public network profile of the plurality of profiles that is currently enabled, wherein the available profiles include at least a private network profile designated with a fallback attribute;
receiving, from the communication device, a fallback trigger to enable a fallback profile corresponding to the fallback attribute;
in response to receiving the fallback trigger:
identifying the private network profile as the fallback profile corresponding to the fallback attribute;
disabling the public network profile;
enabling the private network profile; and
sending a refresh command to the communication device, wherein the refresh command is for causing the communication device to authenticate with a private wireless network corresponding to the private network profile.

18. The method of claim 17, further comprising:
receiving, from the communication device, a request for the available profiles, wherein the request for available profiles is received while the communication device is connected to a public wireless network corresponding to the public network profile.

19. The method of claim 18, further comprising:
receiving, from the communication device, a switchback trigger to re-enable the public network profile;
in response to receiving the switchback trigger:
identifying the public network profile as a switchback network profile;
disabling the private network profile;
enabling the public network profile; and
sending another refresh command to the communication device, wherein the another refresh command is for causing the communication device to authenticate with the public wireless network corresponding to the public network profile.

20. The method of claim 19, wherein the UICC is one of (i) an embedded UICC (eUICC) and (ii) an integrated UICC (iUICC).
